(19) Europäisches Patentamt
European Patent Office
Office européen des brevets

(11) **EP 3 748 397 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **19215886.3**

(22) Anmeldetag: **13.12.2019**

(51) Internationale Patentklassifikation (IPC):
**G01S 7/52** (2006.01)    **G01N 29/04** (2006.01)
**G01N 29/06** (2006.01)    **G01N 29/14** (2006.01)
**G01N 29/32** (2006.01)    **G01N 29/42** (2006.01)
**G01S 3/808** (2006.01)    G01S 15/89 (2006.01)

(52) Gemeinsame Patentklassifikation (CPC):
**G01S 15/89; G01N 29/043; G01N 29/0654;**
**G01N 29/14; G01N 29/32; G01N 29/42;**
**G01S 3/808;** G01N 2291/106; G01S 7/52047;
G01S 15/8936

(54) **VERFAHREN UND ANORDNUNG ZUR ORTSAUFGELÖSTEN ERFASSUNG VON SCHALLEMISSIONEN, INSBESONDERE ULTRASCHALLEMISSIONEN**

METHOD AND ARRANGEMENT FOR LOCALIZED DETECTION OF SOUND EMISSIONS, IN PARTICULAR ULTRASONIC EMISSIONS

PROCÉDÉ ET DISPOSITIF DE DÉTECTION RÉSOLUE LOCALEMENT DES ÉMISSIONS SONORES, EN PARTICULIER DES ÉMISSIONS ULTRASONORES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2019 DE 102019114756**

(43) Veröffentlichungstag der Anmeldung:
**09.12.2020 Patentblatt 2020/50**

(73) Patentinhaber:
• **Fraunhofer-Gesellschaft zur Förderung der angewandten Forschung e.V.**
**80686 München (DE)**
• **Technische Universität Ilmenau**
**98693 Ilmenau (DE)**

(72) Erfinder:
• **Waschkies, Thomas**
**66123 Saarbrücken (DE)**
• **Rabe, Ute**
**66123 Saarbrücken (DE)**
• **Römer, Florian**
**66123 Saarbrücken (DE)**
• **del Galdo, Giovanni**
**98693 Ilmenau (DE)**

(74) Vertreter: **Gagel, Roland**
**Patentanwaltskanzlei**
**Dr. Roland Gagel**
**Landsberger Strasse 480 a**
**81241 München (DE)**

(56) Entgegenhaltungen:
**WO-A1-2016/037783**    **WO-A1-97/32277**
**US-B1- 6 423 004**

**Beschreibung**

**Technisches Anwendungsgebiet**

Die vorliegende Erfindung betrifft ein Verfahren und eine Anordnung zur ortsaufgelösten Erfassung von Schallemissionen aus einem Raumbereich, insbesondere zur berührungslosen Werkstückprüfung oder Prozessüberwachung, bei denen von dem Raumbereich ausgehende Schallsignale, insbesondere Ultraschallsignale, mit einem Array aus mehreren Schallsensoren, insbesondere Ultraschallsensoren, empfangen und die empfangenen Ultraschallsignale ausgewertet werden, um eine ortsaufgelöste Schallintensitätskarte des Raumbereichs zu erstellen.

Eine Ortung, Erkennung und Auswertung der Intensität von Schallquellen bietet in vielen technischen Bereichen Vorteile. So können anhand von Schallsignalen bspw. Störungen in Prozessen erkannt oder Fehler in Werkstücken detektiert werden.

**Stand der Technik**

Zur Schallquellenortung ist es bekannt, ein Array von Schallempfängern einzusetzen, deren Signale mit Hilfe einer Beamforming-Technik ausgewertet werden. Eine gewisse Anzahl von Mikrofonen wird hierfür üblicherweise in einer statischen Anordnung mit Halterungen fixiert. Die Ortungseigenschaften (Ortsauflösung, Gesichtswinkel, unter dem eine Quelle eindeutig lokalisiert werden kann) des Arrays hängen von der Position der Mikrofone relativ zueinander und von der Position und Orientierung des Arrays relativ zu der Schallquelle ab. Aus den empfangenen Signalen wird in der Regel eine ortsaufgelöste Schallintensitätskarte erzeugt, die einem mit einer Kamera aufgezeichneten Bild der Szene überlagert dargestellt wird.

Kommerziell erhältliche Systeme sind in der Regel für den akustischen Frequenzbereich bis maximal 20 kHz ausgelegt. Die Ortsauflösung ist dabei jedoch aufgrund der großen Wellenlängen akustischer Wellen beschränkt. Auch Ultraschall wurde bereits zur Ortung von Schallquellen eingesetzt. So beschreibt bspw. D.E. Chimenti, "Review of air-coupled ultrasonic materials characerization", Ultrasonics 54 (2015), Seiten 1804 bis 1816, Beispiele für die Nutzung von Luft-Ultraschallsignalen im Bereich der zerstörungsfreien Prüfung. Der Ultraschallfrequenzbereich hat den Vorteil, dass die Wellenlänge kleiner ist und daher eine genauere Ortung ermöglicht wird. Allerdings haben Ultraschallsensoren häufig einen Durchmesser von 10 mm oder mehr, so dass der Abstand der einzelnen Sensoren im Array nach unten begrenzt ist. Dadurch ist es nicht mehr oder nur unter großem Aufwand möglich, Arrays mit einem Sensorabstand bereitzustellen, der nicht mehr als die Hälfte der Ultraschallwellenlänge in Luft beträgt. Die Einhaltung dieses Kriteriums ist allerdings notwendig, um störende Artefakte in der erzeugten Schallintensitätskarte zu vermeiden.

Die WO 97/32277A1 offenbart ein Ultraschallbildgebungssystem, mit dem eine dreidimensionale Darstellung eines Abbildungsbereichs erzeugt werden soll. Es umfasst einen Ultraschallwandler mit einem eindimensionalen Bilddatenarray und einem Trackingarray an beiden Enden des Bilddatenarrays, das sich senkrecht zur Längsachse des Bilddatenarrays erstreckt. Das Bilddatenarray wird für die Bildgebung um seine Längsachse gedreht und bei unterschiedlichen Drehwinkeln jeweils Bilder aufgezeichnet. Aus den aufgezeichneten Bildern wird dann unter Nutzung der Trackingdaten aus dem Trackingarray eine dreidimensionale Darstellung des Abbildungsbereichs rekonstruiert.

Die US 6 423 004 B1 offenbart ein Verfahren, bei dem helle Bereiche aus nacheinander unter unterschiedlichen Winkeln aufgenommenen Bilddatensätzen desselben Abbildungsbereichs zu einem kombinierten Bild zusammengesetzt werden. Dadurch lässt sich das Speckle-Rauschen im Bild verringern.

Ausgehend von diesem Stand der Technik besteht die Aufgabe der vorliegenden Erfindung darin, ein Verfahren und eine Anordnung zur ortsaufgelösten Erfassung von Schallemissionen aus einem Raumbereich anzugeben, die die Erzeugung einer Schallintensitätskarte auch auf Basis von Ultraschallsignalen mit einer geringeren Anzahl und/oder Stärke von Artefakten ermöglichen.

**Darstellung der Erfindung**

Die Aufgabe wird mit dem Verfahren und der Anordnung gemäß den Patentansprüchen 1 und 13 gelöst. Vorteilhafte Ausgestaltungen des Verfahrens und der Anordnung sind Gegenstand der abhängigen Patentansprüche oder lassen sich der nachfolgenden Beschreibung sowie den Ausführungsbeispielen entnehmen.

Bei dem vorgeschlagenen Verfahren werden von dem Raumbereich ausgehende Schallsignale, insbesondere Ultraschallsignale, bei einer ersten Messung mit einem Array aus mehreren Schallsensoren, insbesondere Ultraschallsensoren, empfangen, bei der sich die Schallsensoren an ersten Positionen relativ zum Raumbereich befinden. Im Anschluss an diese erste Messung werden eine oder mehrere weitere Messungen mit dem Array aus Schallsensoren durchgeführt, bei denen die Schallsensoren an weiteren Positionen relativ zum Raumbereich angeordnet werden, von denen eine oder mehrere nicht mit den ersten Positionen übereinstimmen. Das Array aus Schallsensoren wird also zwischen den einzelnen Messungen bewegt, so dass es bei den jeweiligen Messungen jeweils eine andere Position und/oder Orientierung relativ zum Raumbereich aufweist. Die Bewegung des Arrays kann durch eine Translation in einer oder mehreren Raumrichtungen oder auch durch eine Rotation oder Kippung des Arrays erreicht werden. Auch eine Kombination von zwei oder allen drei dieser Bewegungen ist möglich. Die bei der ersten und der einen oder den mehreren weiteren Messungen empfangenen Schall- bzw. Ultraschallsignale werden dann - vorzugsweise mit einer Beamforming-Technik - gemeinsam ausgewertet, um eine ortsaufgelöste Schallintensitätskarte des Raumbereichs zu erzeugen. In diese Schallintensitätskarte fließen bei der Auswertung damit nicht nur die Positionen und Schallsignale aus einer sondern aus allen durchgeführten Messungen ein. Bevorzugt erfolgen die Messungen derart, dass eine oder mehrere der weiteren Positionen, die nicht mit den ersten Positionen übereinstimmen, so gewählt werden, dass sie innerhalb einer konvexen Hülle liegen, die durch die ersten Positionen aufgespannt wird. Dadurch weisen wenigstens eine oder mehrere der weiteren Positionen, von dem Raumbereich aus gesehen, jeweils einen Abstand zu wenigstens zwei ersten Positionen auf, der geringer als der gegenseitige Abstand dieser ersten Positionen ist.

Die Durchführung mehrerer Messungen bei unterschiedlichen Positionen der Schallsensoren führt vor allem bei Nutzung von Ultraschallsignalen in Verbindung mit der gemeinsamen Auswertung aufgrund der höheren Anzahl an Datenpunkten zu einer Reduzierung der Artefakte, insbesondere von sog. Grating-Lobes, welche zunehmend bei höheren Frequenzen (oberhalb 20 kHz) relevant werden. Mit dem vorgeschlagenen Verfahren werden derartige Rekonstruktionsartefakte in der Schallintensitätskarte daher reduziert. So beträgt bspw. die Ultraschallwellenlänge $\lambda$ bei einer Frequenz von 500 kHz in Luft nur ca. 0,7 mm. Es ist daher nicht möglich, ein reguläres Array aus Ultraschallsensoren so aufzubauen, dass die einzelnen Sensoren im Abstand einer halben Wellenlänge platziert sind. Hierfür müssten die Ultraschallsensoren so klein werden, dass sie nicht mehr ausreichend akustische Leistung aufnehmen können. Bei größerem Abstand ist jedoch das $\lambda/2$-Kriterium verletzt, so dass im Beamforming-Ergebnis sog. Sidelobes/Grating-Lobes entstehen, einzelne Punktquellen also mehrfach auf der Schallintensitätskarte abgebildet werden. Dieser Effekt entspricht dem Aliasing bei Unterabtastung bandbegrenzter Signale. Es ist jedoch bekannt, wo und in welchem Abstand diese Grating-Lobes entstehen. Führt man eine Bewegung des Arrays um eine Wegstrecke kleiner als $\lambda/2$ aus, so kann aus der neuen in Verbindung mit der ersten Messung ein virtuelles synthetisches Array konstruiert werden, das einen hinreichend kleinen Sensorabstand aufweist, um die Mehrdeutigkeiten aufzulösen. Dies wird bei dem vorgeschlagenen Verfahren ausgenutzt, um eindeutige und zuverlässige Messergebnisse zu erhalten.

Beim vorgeschlagenen Verfahren, der vorgeschlagenen Anordnung und den vorgestellten Ausführungsvarianten des Verfahrens und der Anordnung werden vorzugsweise Ultraschallsensoren bzw. Ultraschallwandler als Schallsensoren bzw. Schallwandler eingesetzt. Das Verfahren lässt sich jedoch auch in anderen Schallbereichen außerhalb des Ultraschalls mit entsprechenden Schallwandlern für diese Bereiche durchführen.

In der bevorzugten Ausgestaltung des Verfahrens wird das Array aus Schallsensoren während der Messungen kontinuierlich räumlich bewegt, so dass die einzelnen Messungen während dieser Bewegung erfolgen. Die Bewegung kann dabei beliebig ausgeführt werden, bspw. gleichförmig, periodisch oder unregelmäßig. Die Bewegung kann händisch bzw. manuell oder auch mit Hilfe einer gesteuerten Aktorik erfolgen. Bei einer manuellen Bewegung wird eine relative Positions- und/oder Orientierungsänderung des Arrays aus Schallsensoren zwischen den einzelnen Messungen erfasst, bspw. mit einer Tracking-Technik, um die einzelnen Positionen der Schallsensoren während der jeweiligen Messungen bestimmen zu können. Hierzu kann bzw. können bspw. eine Inertialsensorik, optisches Positionstracking oder Referenz-Schall- bzw. -Ultraschallsender eingesetzt werden. Eine Kenntnis der Positionen der Schallempfänger bei den jeweiligen Messungen ist auch bei Nutzung einer oder mehrerer Aktoren für die Bewegung erforderlich. Allerdings ist in diesem Fall die jeweilige Position in der Regel bereits über die Ansteuerung des Aktors bekannt.

Bei dem Array aus Schallsensoren werden bei dem vorgeschlagenen Verfahren und der zugehörigen Anordnung vorzugsweise sog. Luft-Ultraschallwandler eingesetzt, die auch Ultraschallsignale aussenden können. Diese Wandler sind speziell für die Aussendung und den Empfang von Ultraschall in bzw. aus Luft abgestimmt. Ein Array kann dabei aus einer beliebigen Anzahl an Schallsensoren bzw. -wandlern bestehen, bspw. 32 oder 64 Sensoren, welche zudem auch unterschiedlich in ihrer Art sein können. Die eingesetzten Sensoren decken dabei wahlweise einen Frequenzbereich von 5 kHz bis 1 MHz ab, vorzugsweise von 20 kHz bis 1 MHz. Die Anordnung der Schallsensoren im Array kann statistisch verteilt sein oder aber nach einem bestimmten Muster erfolgen, bspw. spiralförmig, regelmäßig usw. Der Durchmesser bzw. die Abmessungen des Arrays sind von der Wahl der Messfrequenz abhängig und liegen typischerweise im Bereich von 2 cm bis 200 cm.

Die aus dem Raumbereich empfangenen Schall-Signale können durch einen jeweils überwachten Prozess oder eine jeweils überwachte Szene selbständig erzeugt werden. Es kann jedoch auch aktiv Schall bzw. Ultraschall in den Raumbereich eingestrahlt werden, um entsprechend reflektierte oder transmittierte Schall- bzw. Ultraschall-Signale mit dem vorgeschlagenen Verfahren zu erfassen. Das Verfahren kann dabei neben einer rein passiven Funktion, d. h. nur dem Empfang der Schall-Signale, auch die Erzeugung von Schall umfassen, falls das Array Schall-Wandler zur Erzeugung und zum Aussenden von Schall aufweist. Hierzu können z. B. piezoelektrische Sensoren eingesetzt werden, bspw. Luft-Ultraschallsensoren, welche sowohl als Empfänger als auch als Sender dienen. In diesem Falle kann mit dem Array Schall oder Ultraschall in den Raumbereich eingestrahlt und die jeweils reflektierten Schallsignale gemäß dem vorliegenden Verfahren wiederum mit dem Array detektiert werden, um eine Schallintensitätskarte zu erzeugen.

Eine aktive Einstrahlung von Schall oder Ultraschall kann auch mit einer separaten Schallquelle oder einem separaten Array aus Schallquellen erfolgen, wobei die Schallquelle oder das Array aus Schallquellen in einer vorteilhaften Ausgestaltung zwischen den Messungen relativ zum Raumbereich bewegt wird.

Die vorgeschlagene Anordnung zur ortsaufgelösten Erfassung von Schallemissionen aus einem Raumbereich, die zur Durchführung des vorgeschlagenen Verfahrens ausgebildet ist, weist entsprechend ein Array aus mehreren Schallsensoren, insbesondere Ultraschallsensoren, auf, mit dem von dem Raumbereich ausgehende Schallsignale, insbesondere Ultraschallsignale, empfangen werden können, eine Digitalisierungseinrichtung zur Wandlung der empfangenen Schallsignale in digitale Messdaten und eine Bildgebungseinheit zur Erzeugung der Schallintensitätskarte. Die Bildgebungseinheit erzeugt dabei diese ortsaufgelöste Schallintensitätskarte aus den digitalen Messdaten mehrerer Messungen bei unterschiedlicher Position und/oder Orientierung des Arrays relativ zum Raumbereich, beispielsweise mit einer Beamforming-Technik. Die Anordnung umfasst auch eine Auswerteeinheit zur Auswertung für die jeweilige Anwendung relevanter Informationen aus der Schallintensitätskarte. Diese Informationen können in der Schallintensitätskarte markiert oder gesondert dargestellt oder ausgegeben werden. Die Anordnung weist auch eine Aktorik zur gesteuerten Bewegung des Arrays aus Schallsensoren auf.

Bei dem vorgeschlagenen Verfahren sowie der zugehörigen Anordnung wird die Schallintensitätskarte daraufhin ausgewertet, ob sie noch mehrdeutig ist. Auf Basis dieser Auswertung werden dann eine oder mehrere weitere Positionen bzw. Orientierungen des Arrays für weitere bzw. zusätzliche Messungen bestimmt, um ein eindeutiges oder zumindest zuverlässigeres Ergebnis zu erhalten. Vorzugsweise erfolgt somit nach der ersten und jeweils einer oder mehreren weiteren Messungen jeweils eine Zwischenauswertung, bei der durch gemeinsame Auswertung aller bisher durchgeführten Messungen eine vorläufige Schallintensitätskarte erstellt wird, durch Auswertung dieser Schallintensitätskarte eine oder mehrere nächste Position(en) für die nächste(n) Messung(en) bestimmt wird oder werden, durch die Artefakte weiter verringert werden, und die Ansteuerung zur Durchführung der nächsten Messung(en) entsprechend erfolgt. Diese Auswertung und Bestimmung weiterer Positionen erfolgt automatisiert. Hierbei geht es vor allem um einen oder mehrere weitere Blickwinkel, aus denen der Raumbereich betrachtet werden müsste, um die entsprechenden Mehrdeutigkeiten oder die Unzuverlässigkeit bzw. die Stärke der Artefakte zu verringern. Diese Information über die weiteren Positionen bzw. Orientierungen wird dann genutzt, um im Anschluss an die bisher bereits durchgeführten Messungen nochmals eine oder mehrere weitere Messungen durchzuführen und in die gemeinsame Auswertung zur Erzeugung einer neuen (mit den weiteren Messungen aktualisierten) Schallintensitätskarte einzubeziehen. Im Falle der vorgeschlagenen Anordnung wird die Information an die aktive Bewegungseinheit (Aktor(en) bzw. Aktorik) für das Array weitergegeben, die diese Bewegung dann ausführt. Bei einer manuellen Führung des Arrays durch einen Benutzer wird dieser bei dem vorgeschlagenen Verfahren vorzugsweise durch eine visuelle Anzeige und/oder durch akustische Signale angeleitet, die Bewegung an die weiteren Positionen oder entsprechende Orientierungsänderungen auszuführen.

In einer weiteren möglichen Ausgestaltung des Verfahrens und der Anordnung wird die Art und Weise der Wandlung der empfangenen Schallsignale in digitale Signale in Abhängigkeit von der Auswertung der Schallintensitätskarte beeinflusst. Insbesondere hat dies zum Ziel, die Bilderzeugung und Auswertung auf relevante Daten zu fokussieren, um diese möglichst gut abzubilden und den Aufnahmeprozess aufwandsgünstig zu gestalten. Dies erleichtert und beschleunigt die Nachverarbeitung und ermöglicht so eine Echtzeitfähigkeit der Bildgebung. So kann die Auswerteeinheit bspw. durch eine Fourier-Analyse feststellen, dass die empfangenen Signale sich bei bestimmten Frequenzbereichen konzentrieren, in denen besonders viel Energie empfangen wird. Sie weist darauf die Digitalisierungseinheit an, zu einer direkten Erfassung der Fourier-Koeffizienten in den relevanten Bereich überzugehen, also mit Hilfe von schmalbandigen Filtern einen kleinen Bereich des Spektrums auszuschneiden und nur diesen zu erfassen. Diese Vorverarbeitung erlaubt eine Bildgebung auf einer wesentlich reduzierten Datenmenge, was zur erheblichen Beschleunigung der Erzeugung der Schallintensitätskarte, insbesondere des Beamformings, führt. Durch die analoge und/oder digitale Ausfilterung irrelevanter Anteile können außerdem ungewünschte Signalanteile wie Rauschen besser ausgefiltert werden, was zu einer Verbesserung des Signal- zu -Rauschverhältnisses führt.

Bei Nutzung einer aktiven Anregung, bei der aktiv Schall bzw. Ultraschall in den zu überwachenden Raumbereich eingestrahlt und die Reaktion auf diese aktive Anregung, bspw. Transmission oder Reflexion, beobachtet bzw. erfasst wird, kann auf Basis der Auswertung diese aktive Anregung ebenfalls beeinflusst werden. So kann die Auswerteeinheit bspw. entscheiden, wie das Anregungssignal gestaltet werden muss, um bestimmte Effekte möglichst gut abzubilden. Die Auswerteeinheit kann gleichzeitig das Feedback zur Digitalisierungseinheit nutzen bzw. die Digitalisierungseinheit geeignet ansteuern, um die Digitalisierung der Schallsignale passend zum Anregungssignal zu steuern. So kann bspw. zur Abbildung kleiner Defekte in einem Werkstück, die bei bestimmten typischen Frequenzen starke Antworten zeigen (z. B. durch Resonanzeffekte), eine schmalbandige Anregung sinnvoll sein. Die Auswerteeinheit könnte dann ein allmähliches Durchstimmen der Frequenz des Anregungssignals veranlassen und dazu passend die Signale schmalbandig erfassen. So kann die Anregungsfrequenz durch eine stückweite Suche optimiert werden, bis die resonante Antwort aus dem Raumbereich, bspw. eines dort vorhandenen des Prüflings, in ihrer Amplitude maximiert wird. Die so gefundene Resonanzfrequenz gibt Auskunft über die Defektbeschaffenheit (z. B. die effektive Größe). Eine Anwendung stellt bspw. das LDR-Verfahren (LDR: Lokale Defektresonanz) dar.

Das vorgeschlagene Verfahren und die zugehörige Anordnung lassen sich für alle Anwendungen einsetzen, bei denen Schallemissionen aus einem Raumbereich ortsaufgelöst erfasst werden müssen. Beispiele sind hierbei die zerstörungsfreie Werkstoffprüfung oder die Prozessüberwachung. So emittieren bspw. manche technische Systeme, wie Schweiß- und Zerspanungsmaschinen während des Prozesses akustische Signale im Ultraschallbereich, die spezifisch für den Prozess sind und für die Steuerung und Überwachung des Prozesses genutzt werden können. Auch für die Leckageortung lassen sich das Verfahren und die Anordnung einsetzen. Dies ist selbstverständlich keine abschließende Aufzählung.

**Kurze Beschreibung der Zeichnungen**

Das vorgeschlagene Verfahren und die zugehörige Anordnung werden nachfolgend anhand von Ausführungsbeispielen in Verbindung mit den Zeichnungen nochmals näher erläutert. Hierbei zeigen:

Fig. 1    eine schematische Darstellung eines (vereinfacht dargestellten) Arrays aus Ultraschallsensoren und Beispiele für dessen Bewegung;

Fig. 2    eine beispielhafte Ausgestaltung der vorgeschlagenen Anordnung in schematischer Darstellung;

Fig. 3    Beispiele für mit dem Verfahren erzeugte Schallintensitätskarten nach einer unterschiedlichen Anzahl von Messungen;

Fig. 4    eine Darstellung der Trajektorie des Arrays bei der Durchführung der Messungen der Figur 3;

Fig. 5    Beispiele für mit dem Verfahren gemessene Schallintensitätskarten nach einer unterschiedlichen Anzahl von Messungen;

Fig. 6    ein Beispiel für die Auswertung der Schallintensitätskarte zur Bestimmung von Positionen für weitere Messungen; und

Fig. 7    ein Beispiel für eine auf diese Weise erzeugte Trajektorie für die Bewegung des Arrays.

**Wege zur Ausführung der Erfindung**

Das vorgeschlagene Verfahren und die zugehörige Anordnung nutzen eine Bewegung eines Arrays aus Schallsensoren für unterschiedliche Messungen der Schallemission aus einem interessierenden Raumbereich, um eine hohe Anzahl an Messpositionen zu erhalten und damit Rekonstruktionsartefakte bei der Erstellung einer Schallintensitätskarte zu reduzieren. In den folgenden Beispiel wird dies anhand der Nutzung von Ultraschallsignalen beispielhaft dargestellt.

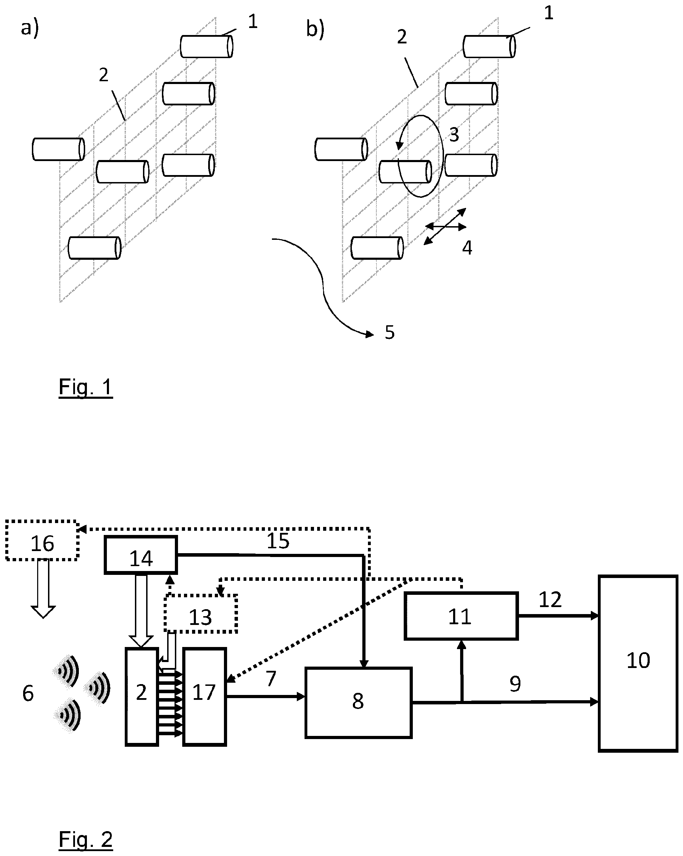

Fig. 1A zeigt hierbei in vereinfachter schematischer Darstellung ein beispielhaftes Array 2 aus Ultraschallsensoren 1. Die einzelnen Ultraschallsensoren 1 können dabei beliebig innerhalb des Arrays 2 angeordnet sein oder auch einem bestimmten Muster folgen. Bei dem vorgeschlagenen Verfahren wird dieses Array 2 jeweils zumindest zwischen den einzelnen Messungen bewegt, um Messungen in unterschiedlicher Position und/oder Orientierung des Arrays 2 relativ zu dem zu erfassenden Raumbereich zu erhalten. Figur 1B zeigt hierzu beispielhaft mit Pfeilen unterschiedliche derartige Bewegungen, insbesondere eine Rotation 3, eine Translation 4 oder eine beliebige Bewegung 5. Die Bewegung des Arrays 2 führt dazu, dass sich die meisten oder alle der Ultraschallsensoren 1 bei den unterschiedlichen Messungen an unterschiedlichen Positionen relativ zu dem zu erfassenden Raumbereich befinden. Durch die Bewegung entsteht eine sog. synthetische Apertur, welche die statische Apertur erweitert und damit für mehr Informationen während der Datenaufnahme sorgt. Durch die gemeinsame Auswertung der Messsignale und Positionen aller Messungen wird eine Schallintensitätskarte mit reduzierten Rekonstruktionsartefakten erzeugt.

Figur 2 zeigt in schematischer Darstellung ein Beispiel für die vorgeschlagene Anordnung zur Durchführung des Verfahrens. In der Figur ist die zu beobachtende Szene bzw. der zu beobachtende Raumbereich durch drei Schallquellen 6 angedeutet. Die Anordnung weist ein Array 2 aus (Luft-)Ultraschallsensoren auf, die ein eingehendes akustisches Schallfeld aus der zu beobachtenden Szene in elektrische Messsignale wandeln. Diese Messsignale werden in einer Digitalisierungseinrichtung 17 bspw. mittels A/D-Wandlung wie bei konventionellem Ultraschall oder durch Fourier-Sampling oder andere bekannte Techniken in digitale Messsignale gewandelt. Die digitalen Messsignale 7 werden einer Bildgebungseinrichtung 8 zugeführt, die mehrkanalige elektrische Messsignale des Sensor-Arrays 2 in eine Schallintensitätskarte 9 überführt. Dies kann bspw. mit Hilfe eines Beamforming-Verfahrens erfolgen. Unter einer Schallintensitätskarte ist hierbei die ortsaufgelöste Darstellung der Stärke des emittierten Ultraschalls zu verstehen. Die Schallintensitätskarte 9 wird dann in nutzerlesbarer Form, bspw. überlagert über ein Videobild der zu beobachtenden Szene, durch eine Anzeigeeinheit 10 dargestellt. Die vorgeschlagene Anordnung umfasst vorzugsweise ebenfalls eine Auswerteeinheit 11, die aus der Schallintensitätskarte 9 Informationen extrahiert, die für die Anwendung relevant sind. Bei der zerstörungsfreien Prüfung kann es sich hierbei bspw. um Art, Größe, Tiefe usw. von erkannten Defekten handeln. Die Auswertung kann bspw. über einen Bildverarbeitungsalgorithmus erfolgen. Diese Informationen werden vorzugsweise als Metainformationen 12 an die Anzeigeeinheit 10 geliefert und durch diese ebenfalls dargestellt.

Die Auswerteeinheit 10 liefert ebenfalls relevante Informationen darüber, wie die Qualität/Zuverlässigkeit des Auswerteergebnisses beschaffen ist und kann daraus ableiten, wie zukünftige bzw. nachfolgende Messungen gestaltet werden sollten, um die Qualität/Zuverlässigkeit noch zu verbessern. Die Auswerteeinheit bestimmt, ob die Szene von einer anderen Position oder Richtung betrachtet werden sollte, um die Qualität bzw. Zuverlässigkeit zu erhöhen. Diese Information gibt sie ggf. an eine Aktorik 13 weiter, die für die gezielte Bewegung des Sensor-Arrays 2 eingesetzt wird. Die Aktorik 13 bewegt dann das Sensor-Array 2 nach dieser Vorgabe, um weitere Messungen bei den gewünschten Positionen bzw. Orientierungen durchzuführen und in die endgültige Schallintensitätskarte aufzunehmen. Diese Aktorik 13 ist in der Lage, das Sensor-Array 2 mechanisch zu bewegen, also nachvollziehbare Änderungen seiner Position (Translation) oder Orientierung (Rotation/Verkippung) herbeizuführen.

Bei handgeführten Geräten ist keine Aktorik vorhanden. Vielmehr wird das Sensor-Array 2 in diesem Falle durch den Benutzer manuell bewegt. Eine derartige Bewegung kann auch schon durch das natürliche Zittern des Benutzers erzeugt werden, der das Sensor-Array 2 hält.

Eine Bewegungssensorik 14 erfasst die jeweils aktuelle Position und Lage des Sensor-Arrays 2 und gibt diese Information weiter an die Bildgebungseinrichtung 8. Diese kombiniert die sequentiellen Aufnahmen aus den unterschiedlichen Blickwinkeln auf die zu untersuchende Szene zu der gewünschten Schallintensitätskarte 9. Hierzu muss jeweils die Position und/oder Orientierung des Sensor-Arrays 2 bei jeder einzelnen Messung bekannt sein. Dies kann durch die Bewegungssensorik 14 bspw. mit Hilfe von Inertialsensorik, optischem Tracking (Kameras/Marker), Referenzultraschallsendern oder auch mit anderen Techniken durchgeführt werden. Ein einzelner Blickwinkel führt im Allgemeinen zu mehrdeutigen Ergebnissen bei der Erstellung der Schallintensitätskarte. Erst die Kombination mehrerer Blickwinkel macht die vorhandenen Defekte bzw. Schallquellen in der zu beobachtenden Szene eindeutig auflösbar. Die Bewegungssensorik 14 liefert daher die Positionsdaten 15 an die Bildgebungseinrichtung 8.

In der Figur 2 ist ebenfalls ein System 16 zur aktiven Anregung optional dargestellt. Es kann sich hierbei um ein Luft-Ultraschallarray, um Shaker oder andere Geräte handeln, die potentiell auch durch die Auswerteeinheit 11 zur Aufnahmeplanung gesteuert werden können. Die aktive Anregung kann bei geeigneter Ausgestaltung auch durch das Sensor-Array 2 selbst erfolgen.

Im Folgenden werden einige Ausführungsbeispiele der Erzeugung von Schallintensitätskarten gemäß dem vorgeschlagenen Verfahren und der zugehörigen Anordnung dargestellt, von denen Ausführungsbeispiel 1 nicht Teil der Erfindung ist, sondern nur der Veranschaulichung dient. Zu Demonstrationszwecken werden hierzu Computersimulationen verwendet. Für diese Beispiele wurden folgende Annahmen getroffen:

- Zwei Schallquellen, die monochromatischen Schall bei f = 120 kHz emittieren (entspricht einer Wellenlänge in Luft von $\lambda \approx 1{,}9$ mm);
- Ein Array zum Empfang der Ultraschallsignale bestehend aus einer schachbrettförmigen Matrix von 5 x 5 Empfangselementen bei einem Elementabstand von $4\,\lambda$;
- Das Koordinatensystem ist so orientiert, dass das Array in der xy-Ebene liegt, in der es verfahren werden kann. Die z-Achse ist in Blickrichtung;
- Für jede Array-Position wird ein Beamforming-Bild errechnet; Frames verschiedener Positionen werden zu einem Gesamtbild miteinander verrechnet.

Als Beamforming-Algorithmus kommt ein Delay-and-Sum-Verfahren zum Einsatz. Für die mathematische Beschreibung werden zur Vereinfachung Punktquellen betrachtet, die die akustischen Signale $s_i(t)$ emittieren und sich an der räumlichen Position $(x_{s,i}, y_{s,i}, z_{s,i})$ befinden. Bezeichne ferner $(x_{r,m}, y_{r,m}, 0)$ die Positionen (Phasenzentren) der $M$ Empfangselemente für $m = 1,2,\ldots, M$ (Ohne Beschränkung der Allgemeinheit definieren wir das Koordinatensystem so, dass das Array in der $(x,y)$-Ebene bei $z = 0$ liegt). Dann kann das Empfangssignal am $m$-ten Empfangselement näherungsweise beschrieben werden durch $r_m(t) = \Sigma_i\, a_i \cdot x_i(t - \tau_{i,m}) + w_m(t)$ wobei $a_i$ die Empfangsamplitude darstellt (die u.a. die Schallabschwächung zwischen Quelle und Empfänger beinhaltet), $w_m(t)$ das Empfängerrauschen repräsentiert

$$\tau_{i,m} = \frac{1}{c}\sqrt{\left(x_{s,i} - x_{r,m}\right)^2 + \left(y_{s,i} - y_{r,m}\right)^2 + z_{s,i}^{\,2}}$$

und die Schalllaufzeit beschreibt. Alternativ eignet sich eine Frequenzbereichsdarstellung. Im Spektralbereich lässt sich schreiben $R_m(f) = \Sigma_i\, a_i \cdot S_i(f) \cdot e^{-j2\pi f \tau_{i,m}} + W_m(f)$.

Um ein Beamforming-Bild in einer bestimmten Fokus-Ebene $z_f$ zu erstellen wird zunächst ein Pixel-Gitter $(x_{f,j}, y_{f,j})$ definiert (typischerweise als kartesisches Produkt eines äquidistanten Gitters in $x$ und $y$). Die Fokussierung auf einen Punkt wird dann mit dem Delayand-Sum-Verfahren erreicht über

$$b_j(t) = \sum_m r_m(t - \tau_{j,m})$$

bzw.

$$B_j(f) = \sum_m R_m(f) \cdot e^{j2\pi f \tau_{j,m}}$$

mit

$$\tau_{j,m} = \frac{1}{c} \sqrt{\left(x_{f,j} - x_{r,m}\right)^2 + \left(y_{f,j} - y_{r,m}\right)^2 + z_{f,j}{}^2}.$$

Es werden drei Ausführungsbeispiele diskutiert, zwei davon anhand von Simulationen:

- Reduktion von Artefakten durch die räumliche Unterabtastung mit Hilfe einer Bewegung des Arrays in Spiral-Form.
- Feedbackmechanismus, der eine gezielte Bewegung des Arrays ausführt, um eine möglichst gute Reduktion der beobachteten Artefakte zu erreichen.
- Feedbackmechanismus, um Anregung und Abtastung des Signals adaptiv anzupassen.

Ausführungsbeispiel 1:

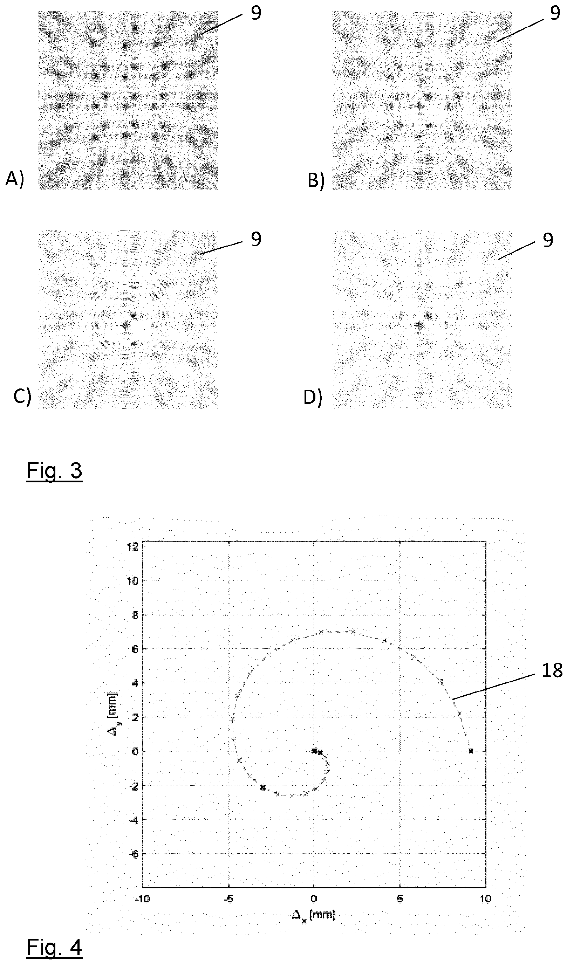

In diesem Beispiel wird gezeigt, wie die Bewegung des Arrays entlang einer vorher ausgewählten Trajektorie helfen kann, Artefakte zu reduzieren, die durch eine räumliche Unterabtastung entstehen. Figur 4 zeigt hierbei die spiralförmige Trajektorie 18, entlang der das Array während der Messungen verfahren wird. Die Position des Arrays an den Frames 0, 1, 11 und 25 ist in der Abbildung hervorgehoben. Die Figuren 3A bis 3D zeigen das Beamforming-Ergebnis zu Beginn, sowie entsprechend nach 1, 11 und 25 Bewegungsschritten. Das Auftreten von Artefakten durch die räumliche Unterabtastung im ersten Frame (Figur 3A) ist deutlich zu erkennen, ebenso wie dessen Reduktion in den folgenden Frames. Über die einzelnen Frames wird bei der Auswertung gemittelt. Die tatsächlichen Schallquellen im Zentrum des Frames sind vor allem im letzten Frame (Figur 3D) deutlich zu erkennen.

Ausführungsbeispiel 2:

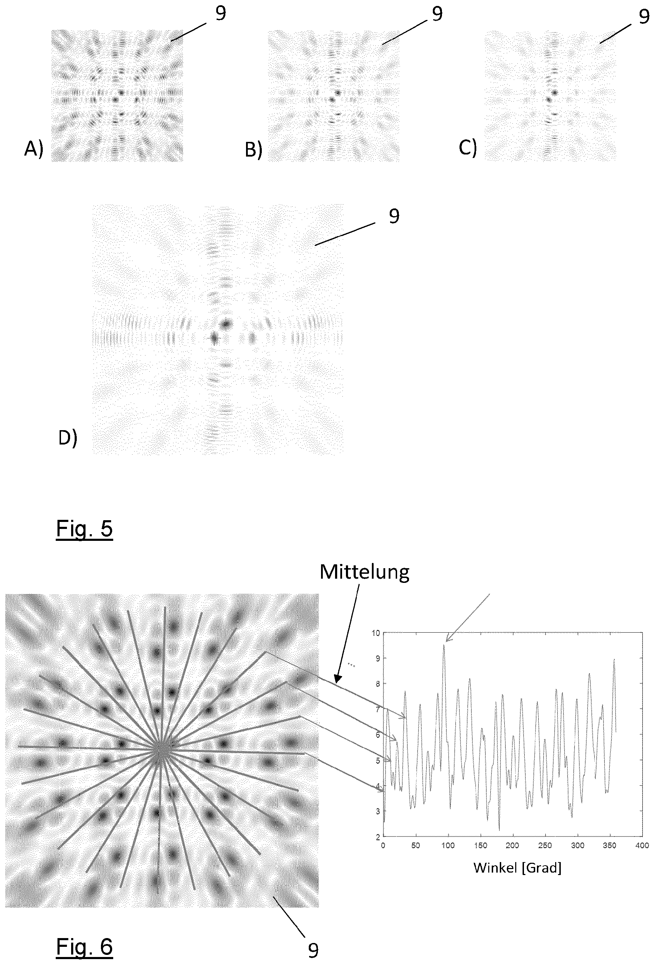

In diesem Beispiel wird angenommen, dass in einem ersten Schritt nur Bewegungen in die horizontale Richtung ausgeführt werden (in Schritten von 0,31 λ). Dies führt zu einem Beamforming-Ergebnis, wie es in den Abbildungen 5A bis 5C dargestellt ist. Es ist deutlich erkennbar, dass die Artefakte in horizontaler Richtung stark gemindert wurden, in vertikaler Richtung jedoch nicht. Die Auswerteeinheit kann dies erkennen und eine Bewegung in vertikaler Richtung für eine weitere Messung einleiten. Dies führt dann zu dem verbesserten Ergebnis, das in Figur 5D zu erkennen ist (nach 25 weiteren vertikalen Bewegungsschritten von insgesamt 50 Schritten).

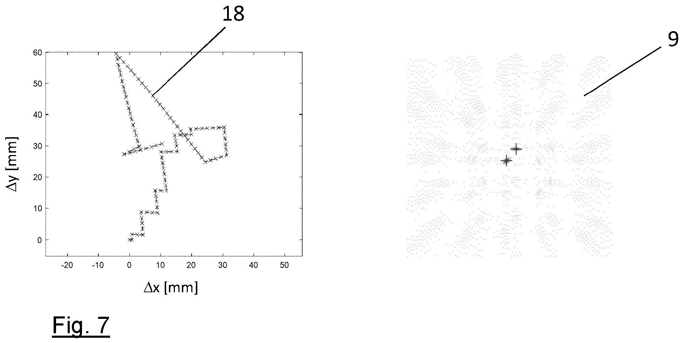

Soll die Bewegung gezielt geplant werden, um die Artefakte zu reduzieren, so ist eine geeignete Bewertungsfunktion nötig. Eine solche Funktion kann bspw. die Energie im bisherigen Beamforming-Zwischenergebnis (vorläufige Schallintensitätskarte) entlang radialer Linien aufsummieren und dabei ggf. bereits erkannte Bildbereiche mit relevanten Aussagen aussparen. Figur 6 zeigt exemplarisch an einem Beispiel, wie durch Aufsummieren entlang radialer Linien ein Maß für die Artefaktstärke in verschiedenen Richtungen gewonnen werden kann. Wird die Bewegung nun so ausgeführt, dass sie stets entlang der Richtung mit den stärksten Artefakten erfolgt (Pfeil im rechten Teil der Figur), ergibt sich eine automatisch gewählte Trajektorie 18, wie sie in Figur 7 für die ersten 100 Frames dargestellt ist. Im rechten Teil der Figur 7 ist das zugehörige Beamforming-Ergebnis und somit die endgültige Schallintensitätskarte bei Anwendung dieses Verfahrens mit der optimierten Trajektorie dargestellt.

Ausführungsbeispiel 3:

Zur Digitalisierung der analogen Signale am Ausgang der Schallwandler 1 des Arrays 2 in der Digitalisierungseinrichtung 17 (vgl. Fig. 2) wird vorzugsweise eine flexible Hardware-Plattform verwendet, die es erlaubt, die Digitalisierungsstrategie an das Vorwissen über die zu erfassenden Signale anzupassen. Diese Überlegung beruht auf der Tatsache, dass Signale in diesen Anwendungen typischerweise bestimmte Strukturen aufweisen.

So sind bspw. häufiger Prozesse anzutreffen, die innerhalb einer schmalen Ultraschall-Bandbreite erheblich Signalenergie emittieren und wenig bis keine Energie außerhalb dieser. Hierzu gehören vor allem resonante Prozesse, wobei die Resonanzfrequenz und Bandbreite typisch für die Größe und Form des zu beobachtenden Phänomens sind. Exemplarisch sei hier die lokale Defektresonanz erwähnt, bei der der Zusammenhang zwischen Resonanz und Defektgröße analytisch abgeleitet wird.

In diesem Szenarium ist also davon auszugehen, dass der relevante Teil der zu erfassenden Signale aus mehreren schmalbandigen Teilbändern zusammengesetzt ist, der in genauer Lage unbekannt ist. Solche Signale lassen sich sehr effizient digitalisieren, wobei die effektive Abtastrate deutlich unter der Rate liegt, die das Shannon-Nyquist-Theorem vorgibt. Es kann also insbesondere mit einer Abtastrate gearbeitet werden, die deutlich unter der Trägerfrequenz der Signalquellen liegt. Das ist für eine echtzeitfähige Verarbeitung mehrkanaliger Daten im Ultraschallfrequenzbereich außerordentlich vorteilhaft. Die diesem Messprinzip zugrundeliegende Theorie wird bereits in Vetterli et al., "Sampling signals with finite rate of innovation", IEEE Transactions on Signal Processing, vol. 50 (2002), S. 1417-1428 beschrieben. Eine Anpassung des Prinzips auf die hier vorliegenden Multibandsignale findet sich bspw. in Mishali et al., "Blind multiband signal reconstruction: Compressed sensing for analog signals", IEEE Transactions on Signal Processing 57.3 (2009), S. 993-1009, konkrete Hardwarerealisierungsmöglichkeiten werden u.a. in Mishali et al., "From theory to practice: Sub-Nyquist sampling of sparse wideband analog signals", IEEE Journal of selected topics in signal processing 4.2 (2010), S. 375-391 diskutiert.

Im Falle bekannter Resonanzfrequenzen kann eine direkte Messung im Frequenzbereich verwendet werden. Hierbei werden schmalbandige durchstimmbare Filter eingesetzt, die auf einzelne Mittenfrequenzen eingestellt werden können, bei denen Signalanteile zu erwarten sind. Die komplexen Fourierkoeffizienten an diesen Frequenzstützstellen können so bspw. mit einfachen I/Q-Empfängerschaltungen direkt gemessen werden.

In einer möglichen Realisierung des vorgeschlagenen Verfahrens und der zugehörigen Anordnung kann nun, vorzugsweise durch geeignete Ansteuerung mittels der Auswerteeinheit, eine aktive Anregung verwendet werden, bei der in einem schmalen Frequenzbereich Schallenergie (Ultraschall) in das zu untersuchende Medium im Raumbereich eingekoppelt und der Empfänger so konfiguriert wird, dass er bei der gleichen Frequenz die Messung ausführt. Die gewählte Frequenz kann nun verändert werden, wobei Sender und Empfänger synchron zueinander in der Frequenz verfahren werden. Diese Technik erlaubt es, resonante Phänomene mit sehr hoher Güte zu vermessen. Die schmalbandige Anregung und Messung unterdrückt einen erheblichen Teil der unerwünschten Signalanteile, wie bspw. Messrauschen. Bei jeder Messung kann auf diese Weise die aufzuzeichnende Datenmenge klein gehalten werden (durch die direkte Messung im Frequenzbereich), was eine Echtzeitverarbeitung ermöglicht. Hierzu kann direkt die Frequenzbereichsdarstellung des Delay-and-Sum-Beamformers verwendet werden.

Eine weitere Verkörperung der Digitalisierungseinrichtung 17 erlaubt es, flexibel zu entscheiden, welche der analogen Kanäle des Sensor-Arrays 2 zur Digitalisierung ausgewählt werden (im Sinne eines Mehrkanalumschalters/Switches). Hierdurch kann durch Umschalten während des Messprozesses die effektive Array-Anordnung geändert werden, mit der die Szene beobachtet wird.

Bezugszeichenliste

| | |
|---|---|
| 1 | Ultraschallsensor |
| 2 | Sensor-Array |
| 3 | Rotation |
| 4 | Translation |
| 5 | beliebige Bewegung |
| 6 | Schallquellen |
| 7 | Messsignale |
| 8 | Bildgebungseinrichtung |
| 9 | Schallintensitätskarte |
| 10 | Anzeigeeinheit |
| 11 | Auswerteinheit |
| 12 | Metainformationen |
| 13 | Aktorik |
| 14 | Bewegungssensorik |
| 15 | Positionsdaten |
| 16 | System zur aktiven Anregung |
| 17 | Digitalisierungseinrichtung |
| 18 | Trajektorie |

**Patentansprüche**

1. Verfahren zur ortsaufgelösten Erfassung von Schallemissionen aus einem Raumbereich, insbesondere zur berührungslosen Werkstückprüfung oder Prozessüberwachung, mit einem Array (2) aus mehreren Schallsensoren (1), insbesondere Ultraschallsensoren, bei dem

   - von dem Raumbereich ausgehende Schallsignale bei einer ersten Messung mit dem Array (2) empfangen werden, bei der sich die Schallsensoren (1) an ersten Positionen relativ zum Raumbereich befinden,
   - eine oder mehrere weitere Messungen mit dem Array (2) aus Schallsensoren (1) durchgeführt werden, bei denen die Schallsensoren (1) an weiteren Positionen relativ zum Raumbereich angeordnet werden, von denen zumindest eine nicht mit den ersten Positionen übereinstimmt, und
   - die bei der ersten und der einen oder den mehreren weiteren Messungen empfangenen Schallsignale gemeinsam ausgewertet werden, um eine ortsaufgelöste Schallintensitätskarte (9) des Raumbereichs zu erzeugen,

   **dadurch gekennzeichnet,**
   **dass** die Schallintensitätskarte daraufhin ausgewertet wird, ob sie noch mehrdeutig ist, wobei auf Basis dieser Auswertung dann eine oder mehrere weitere Positionen oder Orientierungen des Arrays für zusätzliche Messungen bestimmt werden, um ein eindeutiges oder zumindest zuverlässigeres Ergebnis zu erhalten.

2. Verfahren nach Anspruch 1,
   **dadurch gekennzeichnet,**
   **dass** eine oder mehrere der weiteren Positionen, die nicht mit den ersten Positionen übereinstimmen, so gewählt werden, dass sie innerhalb einer konvexen Hülle liegen, die durch die ersten Positionen aufgespannt wird.

3. Verfahren nach Anspruch 1 oder 2,
   **dadurch gekennzeichnet,**
   **dass** das Array (2) aus Schallsensoren (1) während der Erfassung bewegt wird, wobei die eine oder die mehreren weiteren Messungen während der Bewegung erfolgen.

4. Verfahren nach Anspruch 3,
   **dadurch gekennzeichnet,**
   **dass** die Bewegung manuell durch einen Benutzer erfolgt und eine relative Positions- und/oder Orientierungsänderung des Arrays (2) aus Schallsensoren (1) zwischen der ersten Messung und der einen oder den mehreren weiteren Messungen erfasst wird.

5. Verfahren nach Anspruch 3,
   **dadurch gekennzeichnet,**
   **dass** die Bewegung mit einem Aktor (13) erfolgt und eine relative Positions- und/oder Orientierungsänderung des Arrays (2) aus Schallsensoren (1) zwischen der ersten Messung und der einen oder den mehreren weiteren Messungen erfasst wird.

6. Verfahren nach Anspruch 5,
   **dadurch gekennzeichnet,**

   **dass** auf Basis der Auswertung der Schallintensitätskarte (9) zusätzliche Positionen und/oder Orientierungen des Arrays (2) aus Schallsensoren (1) für eine oder mehrere zusätzliche Messungen bestimmt werden, durch die in der Schallintensitätskarte (9) noch vorhandene Artefakte weiter reduziert werden,
   der Aktor (13) zur Bewegung des Arrays (2) an oder in die zusätzlichen Positionen und/oder Orientierungen angesteuert wird und die eine oder die mehreren zusätzlichen Messungen durchgeführt werden, wobei die Schallintensitätskarte (9) durch Auswertung der bei der einen oder den mehreren zusätzlichen Messungen empfangenen Schallsignale aktualisiert wird.

7. Verfahren nach Anspruch 4,
   **dadurch gekennzeichnet,**

   **dass** auf Basis der Auswertung der Schallintensitätskarte (9) zusätzliche Positionen und/oder Orientierungen des Arrays (2) aus Schallsensoren (1) für eine oder mehrere zusätzliche Messungen bestimmt werden, durch die in der Schallintensitätskarte (9) noch vorhandene Artefakte weiter reduziert werden,
der Benutzer zur Bewegung des Arrays (2) an oder in die zusätzlichen Positionen und/oder Orientierungen visuell und/oder akustisch angeleitet wird und die eine oder die mehreren zusätzlichen Messungen durchgeführt werden, wobei die Schallintensitätskarte (9) durch Auswertung der bei der einen oder den mehreren zusätzlichen Messungen empfangenen Schallsignale aktualisiert wird.

8. Verfahren nach einem der Ansprüche 1 bis 7,
**dadurch gekennzeichnet,**
**dass** auf Basis einer Auswertung der Schallintensitätskarte (9) oder empfangenen Schallsignale eine Vorverarbeitung der empfangenen Schallsignale so gesteuert wird, dass nur für eine Erfassung der Schallemissionen aus dem Raumbereich relevante Frequenzbereiche verarbeitet werden.

9. Verfahren nach einem der Ansprüche 1 bis 8,
**dadurch gekennzeichnet,**

**dass** zur Erzeugung der Schallemissionen aus dem Raumbereich aktiv Schall, insbesondere Ultraschall, in den Raumbereich eingestrahlt wird, wobei auf Basis einer Auswertung der Schallintensitätskarte (9) bei Bedarf eine Anpassung von Eigenschaften, insbesondere Frequenz und/oder Frequenzbandbreite, des aktiv eingestrahlten Schalls vorgenommen wird, um bestimmte Effekte besser zu erfassen, und
nach der Anpassung eine oder mehrere zusätzliche Messungen durchgeführt werden, um die Schallintensitätskarte (9) mit den zusätzlichen Messungen zu aktualisieren.

10. Verfahren nach Anspruch 9,
**dadurch gekennzeichnet,**
**dass** eine zur Wandlung der empfangenen Schallsignale in digitale Messdaten eingesetzte Digitalisierungseinrichtung (17) geeignet angesteuert wird, um die Wandlung der empfangenen Schallsignale passend zu den Eigenschaften, insbesondere Frequenz und/oder Frequenzbandbreite, des aktiv eingestrahlten Schalls zu steuern.

11. Verfahren nach einem der Ansprüche 1 bis 10,
**dadurch gekennzeichnet,**
**dass** zur Erzeugung der Schallemissionen aus dem Raumbereich aktiv Schall, insbesondere Ultraschall, mit einer Schallquelle oder einem Array aus Schallquellen in den Raumbereich eingestrahlt wird, wobei die Schallquelle oder das Array aus Schallquellen zwischen den Messungen relativ zum Raumbereich bewegt wird.

12. Verfahren nach einem der Ansprüche 1 bis 11,
**dadurch gekennzeichnet,**
**dass** als Schallsensoren (1) Luft-Ultraschallwandler eingesetzt werden, die auch Ultraschallsignale aussenden können.

13. Anordnung zur ortsaufgelösten Erfassung von Ultraschallemissionen aus einem Raumbereich mit dem Verfahren nach einem oder mehreren der vorangehenden Patentansprüche, die

- ein Array (2) aus mehreren Schallsensoren (1), insbesondere Ultraschallsensoren, aufweist, mit dem von dem Raumbereich ausgehende Schallsignale, insbesondere Ultraschallsignale, empfangen werden können,
- eine Digitalisierungseinrichtung (17) zur Wandlung der empfangenen Schallsignale in digitale Messdaten,
- eine Bildgebungseinrichtung (8), die aus den digitalen Messdaten mehrerer Messungen bei unterschiedlicher Position und/oder Orientierung des Arrays (2) relativ zum Raumbereich eine ortsaufgelöste Schallintensitätskarte (9) des Raumbereichs erzeugen kann,
- eine Auswerteeinheit (11) zur Auswertung relevanter Informationen aus der Schallintensitätskarte (9) und
- eine Aktorik (13) zur gesteuerten Bewegung des Arrays (2) aus mehreren Schallsensoren (1),

**dadurch gekennzeichnet,**

**dass** die Auswerteeinheit (11) so ausgebildet ist, dass sie auf Basis einer Auswertung der Schallintensitätskarte (9) ob sie noch mehrdeutig ist, zusätzliche Positionen und/oder Orientierungen des Arrays (2) aus Schallsensoren (1) für eine oder mehrere zusätzliche Messungen bestimmt, durch die in der Schallintensitätskarte (9) noch vorhandene Artefakte weiter reduziert werden,
den Aktor (13) zur Bewegung des Arrays (2) an oder in die zusätzlichen Positionen und/oder Orientierungen und das Array zur Durchführung der einen oder mehreren zusätzlichen Messungen ansteuert, wobei die Schallintensitätskarte (9) durch Auswertung der bei der einen oder den mehreren zusätzlichen Messungen empfangenen Schallsignale aktualisiert wird.

**14.** Anordnung nach Anspruch 13,
**dadurch gekennzeichnet,**
**dass** die Auswerteeinheit (11) so ausgebildet ist, dass sie auf Basis einer Auswertung der Schallintensitätskarte (9) oder empfangenen Schallsignale die Digitalisierungseinrichtung (17) so zur Vorverarbeitung der empfangenen Schallsignale ansteuert, dass nur für eine Erfassung der Schallemissionen aus dem Raumbereich relevante Frequenzbereiche verarbeitet werden.

**15.** Anordnung nach einem der Ansprüche 13 oder 14,
**dadurch gekennzeichnet,**
**dass** sie eine Bewegungssensorik (14) aufweist, mit der eine relative Positions- und/oder Orientierungsänderung des Arrays (2) aus Schallsensoren (1) zwischen den Messungen bei unterschiedlicher Position und/oder Orientierung des Arrays (2) relativ zum Raumbereich erfassbar ist.

## Claims

**1.** Method for spatially resolved detection of sound emissions from a spatial area, in particular for contactless workpiece testing or process monitoring, with an array (2) consisting of a plurality of sound sensors (1), in particular ultrasonic sensors, in which

- sound signals emanating from the spatial area are received with the array (2) during a first measurement, during which the sound sensors (1) are in first positions relative to the spatial area,
- one or more further measurements is/are carried out with the array (2) of sound sensors (1), during which the sound sensors (1) are arranged at other positions relative to the spatial area, of which at least one does not correspond to the first positions, and
- the sound signals received during the first and the one or more further measurements are evaluated jointly in order to generate a spatially resolved sound intensity map (9) of the spatial area,

**characterized in that**
the sound intensity map is then evaluated to determine whether it is still ambiguous, wherein one or more further positions or orientations of the array is/are then determined for additional measurements on the basis of this evaluation, in order to obtain an unambiguous or at least a more reliable result.

**2.** Method according to Claim 1,
**characterized in that**
one or more of the further positions which do not correspond to the first positions are selected in such manner that they lie within a convex envelope that is spanned by the first positions.

**3.** Method according to Claim 1 or 2,
**characterized in that**
the array (2) of sound sensors (1) is moved during the detection, wherein the one or more further measurements are carried out during the movement.

**4.** Method according to Claim 3,
**characterized in that**
the movement is carried out manually by a user, and a relative change in position and/or orientation of the array (2) of sound sensors (1) between the first measurement and the one or more further measurements is detected.

**5.** Method according to Claim 3,
**characterized in that**
the movement is performed with an actuator (13), and a relative change in position and/or orientation of the array (2) of sound sensors (1) between the first measurement and the one or more further measurements is detected.

**6.** Method according to Claim 5,

**characterized in that**

additional positions and/or orientations of the array (2) of sound sensors (1) are determined for one or more additional measurements on the basis of the evaluation of the sound intensity map (9), by means of which artifacts still present in the sound intensity map (9) are further reduced, the actuator (13) for moving the array (2) is directed towards or into the additional positions and/or orientations, and the one or more additional measurements are carried out, wherein the sound intensity map (9) is updated by evaluation of the sound signals received during the one or more additional measurements.

**7.** Method according to Claim 4,
**characterized in that**

additional positions and/or orientations of the array (2) of sound sensors (1) are determined for one or more additional measurements on the basis of the evaluation of the sound intensity map (9), by means of which artifacts still present in the sound intensity map (9) are further reduced, the user is guided visually and/or acoustically to move the array (2) towards or into the additional positions and/or orientations, and the one or more additional measurements are carried out, wherein the sound intensity map (9) is updated by evaluation of the sound signals received during the one or more additional measurements.

**8.** Method according to any one of Claims 1 to 7,
**characterized in that**
preprocessing of the received sound signals is controlled on the basis of an evaluation of the sound intensity map (9) or received sound signals in such a way that only frequency ranges that are relevant for detecting the sound emissions from the spatial area are processed.

**9.** Method according to any one of Claims 1 to 8,
**characterized in that**
in order to generate the sound emissions from the spatial area, sound, in particular ultrasound, is actively radiated into the spatial area, wherein an adaptation of properties, in particular frequency and/or frequency bandwidth, of the actively radiated sound is carried out if necessary on the basis of an evaluation of the sound intensity map (9) in order to better detect certain effects, and after the adaptation, one or more additional measurements are carried out to update the sound intensity map (9) with the additional measurements.

**10.** Method according to Claim 9,
**characterized in that**
a digitising device (17) used to convert the received sound signals into digital measurement data is suitably controlled in order to control the conversion of the received sound signals to match the properties, in particular frequency and/or frequency bandwidth, of the actively radiated sound.

**11.** Method according to any one of Claims 1 to 10,
**characterized in that**
in order to generate the sound emissions from the spatial area, sound, in particular ultrasound, is actively radiated into the spatial area, with a sound source or an array of sound sources, wherein the sound source or the array of sound sources is moved relative to the spatial area between the measurements.

**12.** Method according to any one of Claims 1 to 11,
**characterized in that**
air-ultrasonic transducers which can also emit ultrasonic signals are used as sound sensors (1).

**13.** Arrangement for spatially resolved detection of ultrasonic emissions from a spatial area with the method according to one or more of the preceding claims, which comprises

- an array (2) of a plurality of sound sensors (1), in particular ultrasonic sensors, with which sound signals emanating from the spatial area, in particular ultrasonic signals, can be received,
- a digitising device (17) for converting the received sound signals into digital measurement data,
- an imaging device (8) which can generate a spatially resolved sound intensity map (9) of the spatial area from the digital measurement data of multiple measurements at different positions and/or orientations of the array (2) relative to the spatial area,

- an evaluation unit (11) for evaluating relevant information from the sound intensity map (9), and
- an actuator (13) for the controlled movement of the array (2) of a plurality of sound sensors (1),

**characterized in that**

the evaluation unit (11) is designed in such a way that on the basis of an evaluation of whether the sound intensity map (9) is still ambiguous, it determines additional positions and/or orientations of the array (2) of sound sensors (1) for one or more additional measurements, by means of which artifacts still present in the sound intensity map (9) are further reduced,
controls the actuator (13) for moving the array (2) towards or into the additional positions and/or orientations, and the array for performing the one or more additional measurements, wherein the sound intensity map (9) is updated by evaluating the sound signals received during the one or more additional measurements.

**14.** Arrangement according Claim 13,
**characterized in that**
the evaluation unit (11) is designed in such a way that on the basis of an evaluation of the sound intensity map (9) or received sound signals it controls the digitisation device (17) for preprocessing the received sound signals in such a way that only frequency ranges that are relevant for detecting the sound emissions from the spatial area are processed.

**15.** Arrangement according to one of claims 13 or 14,
**characterized in that**
it includes a motion sensor system (14), with which a relative change in position and/or orientation of the array (2) of sound sensors (1) between measurements at different positions and/or orientations of the array (2) relative to the spatial area can be detected.

**Revendications**

**1.** Procédé pour la détection spatialement résolue des émissions sonores dans une zone spatiale, notamment pour l'essai sans contact de pièces ou la surveillance de processus, comportant un réseau (2) de plusieurs capteurs sonores (1), notamment des capteurs à ultrasons, dans lequel

- des signaux sonores émanant de la zone spatiale sont reçus d'une première mesure avec le réseau (2), dans lequel les capteurs sonores (1) sont situés à des premières positions par rapport à la zone spatiale,
- une ou plusieurs autres mesures sont effectuées avec le réseau (2) de capteurs sonores (1), dans lequel les capteurs sonores (1) sont disposés à d'autres positions par rapport à la zone spatiale, dont au moins une ne correspond pas aux premières positions, et
- les signaux sonores reçus lors de la première mesure et une ou plusieurs autres mesures sont évalués ensemble pour créer une carte d'intensité sonore résolue spatialement (9),

**caractérisé en ce que**
la carte d'intensité sonore est évaluée pour déterminer si elle est encore ambiguë, dans lequel sur la base de cette évaluation une ou plusieurs autres positions ou orientations du son sont déterminées, pour obtenir un résultat plus clair ou au moins plus fiable.

**2.** Procédé selon la revendication 1,
**caractérisé en ce**
qu'une ou plusieurs des autres positions qui ne correspondent pas aux premières positions, peuvent être choisies de sorte à ce qu'elles se trouvent à l'intérieur d'une coque convexe, qui s'étend sur les premières positions.

**3.** Procédé selon la revendication 1 ou 2,
**caractérisé en ce que**
le réseau (2) de capteurs sonores (1) est déplacé pendant la détection, dans lequel la ou les autres mesures ont lieu pendant le mouvement.

**4.** Procédé selon la revendication 3,
**caractérisé en ce que**

le mouvement est effectué manuellement par un utilisateur et un changement de position relative et/ou d'orientation du réseau (2) est détecté par des capteurs sonores (1) entre la première mesure et la ou les autres mesures.

**5.** Procédé selon la revendication 3,
**caractérisé en ce que**
le déplacement s'effectue avec un actionneur (13) et un changement de position relative et/ou d'orientation du réseau (2) de capteurs sonores (1) est enregistré entre la première mesure et la ou les autres mesures.

**6.** Procédé selon la revendication 5,
**caractérisé en ce que**

sur la base de l'évaluation de la carte d'intensité sonore (9) les positions supplémentaires et/ou les orientations du réseau (2) de capteurs sonores (1) sont déterminées pour une ou plusieurs mesures supplémentaires, par l'intermédiaire desquelles les artefacts encore présents dans la carte d'intensité sonore (9) sont davantage réduits,
l'actionneur (13) pour déplacer le réseau (2) est commandé vers ou dans les positions et/ou orientations supplémentaires et la ou les mesures complémentaires sont effectuées, dans lequel la carte d'intensité sonore (9) est mise à jour en évaluant les signaux sonores reçus lors de la ou des mesures supplémentaires.

**7.** Procédé selon la revendication 4,
**caractérisé en ce**

**qu'**à partir de l'évaluation de la carte d'intensité sonore (9), des positions et/ou orientations supplémentaires du réseau (2) de capteurs sonores (1) sont déterminées pour une ou plusieurs mesures supplémentaires, par l'intermédiaire desquelles les artefacts encore présents dans la carte d'intensité sonore (9) sont davantage réduits,
l'utilisateur est guidé visuellement et/ou acoustiquement pour déplacer le réseau (2) vers ou dans les positions et/ou orientations supplémentaires, dans lequel la carte d'intensité sonore (9) est mise à jour en évaluant les signaux sonores reçus lors de la ou des mesures supplémentaires.

**8.** Procédé selon une des revendications 1 à 7,
**caractérisé en ce que**
sur la base d'une évaluation de la carte d'intensité sonore (9) ou des signaux sonores reçus un prétraitement des signaux sonores reçus est commandé de telle sorte que seules les plages de fréquences pertinentes pour la détection des émissions sonores de la zone spatiale soient traitées.

**9.** Procédé selon une des revendications 1 à 8,
**caractérisé en ce que**
pour générer les émissions sonores hors de la zone spatiale du son actif, notamment des ultrasons, sont irradiés dans la zone spatiale, dans lequel sur la base d'une évaluation de la carte d'intensité sonore (9) au besoin une adaptation des propriétés, notamment en fréquence et/ou bande passante de fréquence du son irradié activement est effectuée, afin de mieux détecter certains effets, et après l'adaptation, une ou plusieurs mesures supplémentaires sont effectuées afin de mettre à jour la carte d'intensité sonore (9) avec les mesure supplémentaires.

**10.** Procédé selon la revendication 9,
**caractérisé en ce**
**qu'**un dispositif de numérisation (17) employé pour convertir les signaux sonores reçus en données de mesure numériques est commandé de sorte appropriée pour convertir les signaux sonores reçus en fonction des propriétés, en particulier de la fréquence et/ou de la bande passante de fréquence du son irradié activement.

**11.** Procédé selon une des revendications 1 à 10,
**caractérisé en ce que**
pour générer les émissions sonores hors de la zone spatiale du son actif, notamment des ultrasons, est irradié avec une source sonore ou un réseau de sources sonores dans la zone spatiale, dans lequel la source sonore ou le réseau de sources sonores est déplacé par rapport à la zone spatiale entre les mesures.

**12.** Procédé selon une des revendications 1 à 11,
**caractérisé en ce que**

des transducteurs à ultrasons aériens sont utilisés comme capteurs sonores (1), qui peuvent également émettre des signaux ultrasonores.

13. Agencement pour la détection spatialement résolue d'émissions d'ultrasons provenant d'une zone spatiale en utilisant le procédé selon une ou plusieurs des revendications précédentes, qui présente

    - un réseau (2) de plusieurs capteurs sonores (1), notamment des capteurs à ultrasons, avec lesquels des signaux sonores, en particulier des signaux ultrasoniques, provenant de la zone spatiale peuvent être reçus,
    - un dispositif de numérisation (17) pour convertir des signaux sonores reçus en données de mesure numériques,
    - un dispositif d'imagerie (8), qui à partir des données de mesure numériques peut générer plusieurs mesures de position et/ou orientations du réseau (2) différentes par rapport à une carte d'intensité sonore (9) résolue spatialement de la zone spatiale,
    - une unité d'évaluation (11) pour évaluer des informations pertinentes provenant de la carte d'intensité sonore (9) et
    - un système d'actionneur (13) pour le mouvement contrôlé du réseau (2) à partir de plusieurs capteurs sonores (1),

    **caractérisé en ce que**

    l'unité d'évaluation (11) est conçue de telle sorte que, sur la base d'une évaluation de la carte d'intensité sonore (9), si celle-ci est encore ambiguë, elle détermine des positions et/ou orientations supplémentaires du réseau (2) de capteurs sonores (1) pour une ou plusieurs mesures supplémentaires, par l'intermédiaire desquelles les artefacts encore présents dans la carte d'intensité sonore (9) sont davantage réduits,
    commande l'actionneur (13) pour déplacer le réseau (2) vers ou dans les positions et/ou orientations supplémentaires et le réseau pour effectuer la ou les mesures supplémentaires, dans lequel la carte d'intensité sonore (9) est mise à jour en évaluant les signaux sonores reçus pendant une ou plusieurs mesures supplémentaires.

14. Agencement selon la revendication 13,
    **caractérisé en ce que**
    l'unité d'évaluation (11) est conçue de manière à commander, sur la base d'une évaluation de la carte d'intensité sonore (9) ou des signaux sonores reçus, le dispositif de numérisation (17) en vue du prétraitement des signaux sonores reçus de telle sorte que seules les plages de fréquences pertinentes pour la détection des émissions sonores de la zone spatiale soient traitées.

15. Agencement selon une des revendications 13 ou 14,
    **caractérisé en ce**
    **qu'**il comporte un système de capteurs de mouvement (14) avec lequel un changement de position relative et/ou d'orientation du réseau (2) peut être détecté à partir des capteurs sonores (1) entre des mesures à différentes positions et/ou orientations du réseau (2) par rapport à la zone spatiale.

Fig. 1

Fig. 2

Fig. 3

Fig. 4

<u>Fig. 5</u>

<u>Fig. 6</u>

Fig. 7

**IN DER BESCHREIBUNG AUFGEFÜHRTE DOKUMENTE**

**In der Beschreibung aufgeführte Patentdokumente**

- WO 9732277 A1

- US 6423004 B1

**In der Beschreibung aufgeführte Nicht-Patentliteratur**

- **D.E. CHIMENTI.** Review of air-coupled ultrasonic materials characerization. *Ultrasonics,* 2015, vol. 54, 1804-1816
- **VETTERLI et al.** Sampling signals with finite rate of innovation. *IEEE Transactions on Signal Processing,* 2002, vol. 50, 1417-1428

- **MISHALI et al.** Blind multiband signal reconstruction: Compressed sensing for analog signals. *IEEE Transactions on Signal Processing,* 2009, vol. 57 (3), 993-1009
- **MISHALI et al.** From theory to practice: Sub-Nyquist sampling of sparse wideband analog signals. *IEEE Journal of selected topics in signal processing,* 2010, vol. 4 (2), 375-391